# EUROPEAN PATENT SPECIFICATION

(11) **EP 0 593 172 B1**
(45) Date of publication and mention of the grant of the patent: **18.12.1996**
(21) Application number: 93307550.9
(22) Date of filing: 23.09.1993
(51) Int. Cl.: B60R 21/24

(54) **Multi-chamber passenger air bag cushion with interchamber venting**
Mehrkammer-Beifahrerluftsackkissen mit Zwischenkammer-Gasverbindung
Coussin à plusieurs compartiments pour sac gonflable d'un passager avec circulation de gaz entre les compartiments

(30) Priority: 16.10.1992 US 961807
(43) Date of publication of application: 20.04.1994
(73) Proprietor: MORTON INTERNATIONAL, INC., Chicago Illinois 60606-1596 (US)
(72) Inventor: Orme, Bradley L., North Ogden, Utah 84414 (US)
(74) Representative: Bankes, Stephen Charles Digby

(56) References cited:
- FR-A- 2 114 201
- US-A- 3 642 303
- US-A- 3 727 942
- US-A- 5 018 762
- US-A- 5 022 675
- 'Passenger Car Inflatable Restraint Systems : A Compendium of Published Safety Research' 1987 , D.C. VIANO , WARRENDALE,US "The Development of Air Cushion Restraint Systems for Small Car Front Seat Occupants", pages 73-80, D.T. Zinke *page 76, Chevette and omni passenger systems; figure 6*

## Description

### BACKGROUND OF THE INVENTION

### 1. Field of the Invention

This invention relates to inflatable occupant restraint systems for the passenger side of automotive vehicles, and more particularly, to a multi-chamber air bag having utility in such systems.

### 2. The Related Art

It is known in the prior art, as disclosed in U.S. Patent No. 3,642,303 granted to F. J. Irish et al., to provide an occupant restraint system comprising a plurality of bags which are inflated on vehicle impact with another vehicle or object. A first one of the bags receives the impact of the occupants' torso. A second one of the bags receives the impact of the occupants' head, the second bag being secured to the top of the first bag. The first one of the bags has controlled pressure relief to prevent excessive movement between the occupant's head and torso. This document forms the preamble of claim 1.

While such a system involving a plurality of bags can provide effective cushioning of a vehicle occupant, a multiple bag system could prove very difficult to construct because of lack of proper access to the interior of the upper or outer bag as needed for the stitching required to sew the two bags together, or more specifically, to sew the head bag to the top of the torso bag.

Thus, there is a need and a demand for improvement in such air bag occupant restraint systems, particularly for the passenger side of vehicles, having separate portions designed to be impacted by the occupant's torso and head (or head and shoulders), respectively, while facilitating the construction thereof, reducing the cost of fabrication, and increasing the reliability. The present invention was designed to fill the technlological gap that has existed in the art in these respects.

### SUMMARY OF THE INVENTION

An object of the invention is to provide an improved vehicle occupant restraint system comprising a multi-chamber air bag having a first chamber for absorbing the impact of the occupant's torso and a second chamber for absorbing the impact of the occupant's head and shoulders and which is characterized by the ease of construction thereof, reduced cost of fabrication, and increased reliability.

According to the invention there is provided a multi-chamber passenger air bag cushion as claimed in claim 1.

In accordance with the invention, the objectives are accomplished by securing in any suitable manner as by stitching a fabric sheet of air bag material to the mouth, that is, the inflating gas inlet opening, and the interior wall of a relatively large air bag thereby dividing the air bag into two chambers.

In the deployment of the air bag according to the invention, the initial flow of gas from an inflator is directed into the lower chamber of the air bag, which chamber fills quickly and directs the bag deployment in a downward direction. The pressurized lower chamber supports the majority of the upper body mass of a passenger in the vehicle during the onset of a crash. The quick deployment restrains the abdominal area of the passenger before the passenger's velocity relative to that of the vehicle is increased significantly. Thereafter, the gas is vented to the upper chamber of the air bag, allowing for a more uniform resistance of the torso region by venting out gas as the internal pressure increases and supplying gas to the upper chamber to cushion the head and shoulder region of the passenger. The gas venting between chambers is provided through discrete vents and/or a permeable membrane which separates the chambers. Additional venting can be provided from the upper chamber to reduce rebound during a crash.

The various features of novelty which characterize the invention are pointed out with particularity in the claims annexed to and forming a part of this specification. For a better understanding of the invention, its operating advantages, and specific objects attained by its use, reference is made to the accompanying drawings and descriptive matter in which a preferred embodiment of the invention is illustrated.

### BRIEF DESCRIPTION OF THE DRAWINGS

With this description of the invention, a detailed description follows with reference being made to the accompanying figures of drawing which form part of the specification, in which like parts are designated by the same reference numbers, and of which:
Fig. 1 is a schematic side elevational view of a fully deployed multi-chamber air bag according to the invention;
Fig. 2 is a fragmented side elevational view in the forward part of an automotive vehicle showing the air bag of Fig. 1 in an initial stage of deployment during a crash;
Fig. 3 is a fragmented side elevational view similar to Fig. 2 showing the pressurized lower chamber of the air bag supporting the majority of the passenger's upper body mass during the onset of a crash; and
Fig. 4 is a fragmented side elevational view similar to Fig. 3 showing the upper chamber pressurized also to cushion the head and shoulders of the pasenger, such pressurization being caused by gas being vented into the upper chamber from the lower chamber.

### DESCRIPTION OF THE PREFERRED EMBODIMENT

Referring to the drawings, the multi-chamber air bag of the invention comprises a relatively large air bag 10 which normally is stowed in a collapsed, folded condition in an air bag module canister 12 that is positioned on the instrument panel 14 of a vehicle opposite the passenger seat.

While the canister 12 and gas generator or inflator 16 contained therein may include any known canister and gas generator or inflator provided for use with a passenger side air bag restraint system, a preferred form of canister 12 and associated inflator 16 that may be employed is that disclosed in the application for US-A-5 332 256, filed February 24, 1992 by Donald R. Lauritzen and Bradley W. Smith and assigned to the assignee of the present invention.

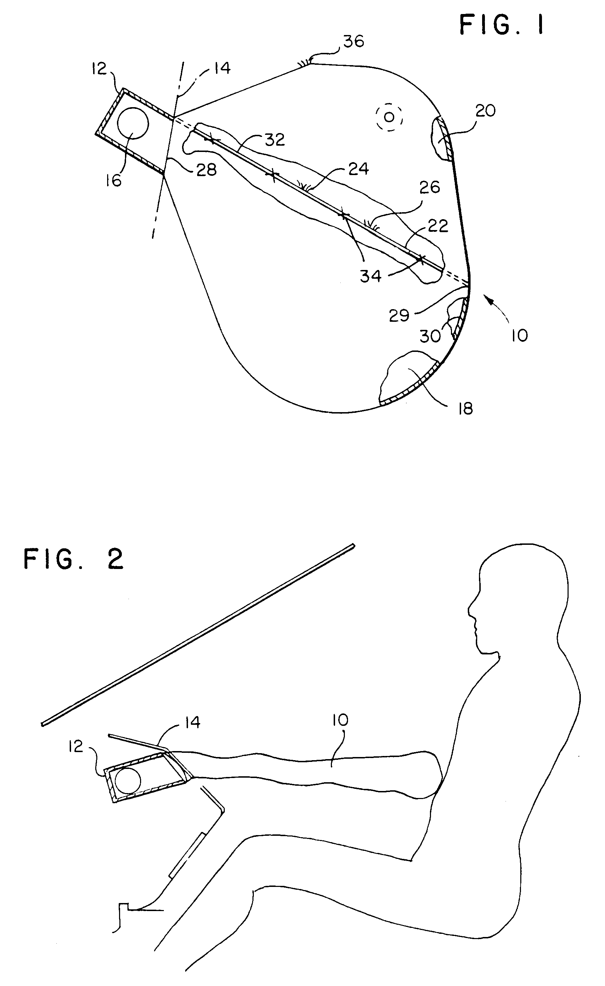

The multi-chamber air bag 10 of the invention is shown in fully deployed condition in Fig. 1. As shown, the air bag 10 includes a lower chamber 18 and an upper chambr 20. The two chambers 18 and 20 have a common wall 22 which allows a gas flow or venting between the chambers 18 and 20 through inter-chamber vents 24 and 26 provided therein.

Fabrication of the multi-chamber air bag 10 is accomplished by sewing a sheet of fabric 32 of air bag material between the upper edge of the mouth 28 and an intermediate region indicated at 29 around the air bag interior wall 30 opposite thereto, such fabric forming the common wall 22 which divides the air bag 10 into lower chamber 18 and upper chamber 20. In addition to dividing the air bag 10 into two chambers, the fabric sheet 32 functions as a tether 34 which limits and directs the deployment of the air bag 10, causing the air bag 10 to rotate into place as it is deployed. The tether 34 also provides shape to the deployed air bag 10. Separation of the single air bag 10 into multiple chambers 18 and 20 using a tether is a simple construction because the mouth 28 of the air bag 10 is the access for stitching.

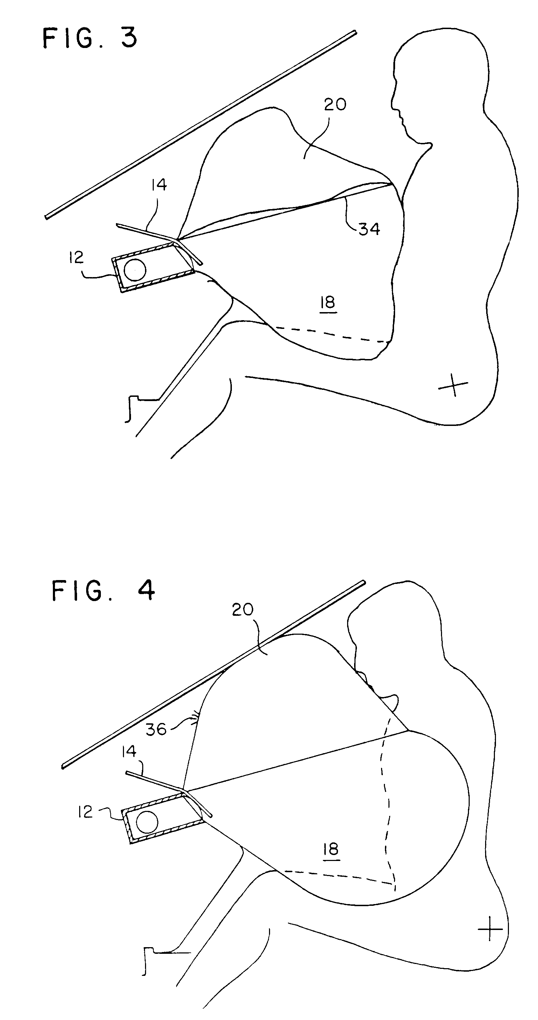

As the air bag 10 is deployed, responsively to the onset of a crash, the initial flow of gas from the inflator 16 is directed into the lower chamber, which fills quickly and directs the bag deployment downward as shown in Fig. 2. The pressurized lower chamber supports the majority of the passenger's upper body mass during the onset, that is, the initial stage, of the crash, as illustrated in Fig. 3. This quick deployment of the air bag 10 restrains the abdominal area of the passenger before the passenger's velocity relative to that of the vehicle is increased significantly. Thereafter, the gas in the lower chamber 18 of the air bag 10 is vented to the upper or top chamber 20 of the air bag 10. This allows for a more uniform resistance of the torso region of the passenger by venting out gas as the internal pressure increases and supplying gas to the upper chamber 20 to cushion the head and shoulder region of the passenger, as illustrated in Fig. 4. The gas venting between chambers 18 and 20 is provided through discrete vents 24 and 26 and/or a permeable membrane (not shown) which separates the chambers 18 and 20. Additional venting can be provided from the upper chamber 20 by a vent 36, as illustrated in Fig. 1 to reduce rebound during a crash.

The invention is characterized in that critical parameters regarding air bag performance (i.e., femur loads, chest Gs and passenger head injury criteria (HIC)) are improved by quicker inflation of the lower chamber 18 of the air bag combined with venting to the upper chamber 20. Air bag deployment is kept low in front and mid mount modules and remains low in the interchamber venting of gas. In a top mount system, the quicker inflation and interchamber venting would help to quickly and correctly position the air bag. Low deployment of the air bag could also improve results in the out-of-position child tests.

Another aspect in respect of which this invention is beneficial is that it allows for greater tailoring ability in order to optimize air bag performance by changing interchamber vent characteristics, chamber volumes and chamber proportions.

Thus, in accordance with the invention, there has been provided an improved vehicle occupant restraint system comprising a multi-chamber air bag having a first chamber for absorbing the impact of the torso of a passenger in a vehicle and a second chamber for absorbing the impact of the head and shoulders of the passenger, which system is characterized by the ease of construction thereof, the reduced cost of fabrication, and increased reliability.

There has also been provided in accordance with the invention a multi-chamber air bag in which the separate chambers have a common wall which allows gas flow or venting between chambers, which common wall functions, additionally, as a tether to limit and direct the deployment of the air bag to provide shape to the deployed air bag.

## Claims

1. A multi-chamber passenger air bag cushion comprising;
(a) an air bag (10) having a mouth (28) for the ingress of inflating gas, which air bag when inflated forms an interior chamber having an inner wall (30), said mouth having an upper edge,
(b) a fabric sheet (32) secured to the inner wall (30) of said air bag, dividing said chamber into a multi-chamber air bag having a lower chamber (18) and an upper chamber (20) in which air bag said upper chamber and said lower chamber have a common wall (22) formed by said fabric sheet, whereby inflating gas entering said mouth (28) fills and pressurizes said lower chamber (18), and
(c) vent means (24, 26) in said fabric sheet (32) for relieving the pressure of the inflating gas in the lower chamber (18) by allowing the flow therethrough into said upper chamber (20) of the inflating gas for the pressurisation of said upper chamber,
whereby said fabric sheet (32) is secured interiorly of said air bag and functions as a tether to direct deployment of said air bag and to shape the deployed air bag whereby as said air bag is deployed, the initial flow of gas entering said mouth (28) is directed into said lower chamber (18) which fills quickly and directs the bag deployment downward so that the pressurized lower chamber supports the majority of the passenger's body mass during the onset of a crash and the quick deployment restrains the abdominal area of the passenger before the passenger's velocity relative to that of the vehicle is increased significantly, and thereafter the gas is vented to the upper chamber (20) of the air bag, allowing for a more uniform resistance of the torso region by venting gas out through said venting means (24, 26) from the lower chamber (18) as the internal pressure therein increases and supplying gas to the upper chamber (20) to cushion the head and shoulder region of the passenger, characterized therein that the fabric sheet (32) is secured between said upper edge of said mouth (28) of said air bag and an intermediate region (29) of said inner wall (30) in opposition to said mouth (28).

2. A multi-chamber passenger air bag cushion (10) as defined by claim 1 wherein said fabric sheet (32) is secured interiorly of said air bag between said upper edge of said mouth (28) of said air bag and said intermediate region (29) of said inner wall (30) by stitching.

3. A multi-chamber passenger air bag cushion (10) as defined by claim 1 or 2 further including means (36) for venting said upper chamber.

4. A multi-chamber passenger air bag cushion (10) as defined by claim 1, 2 or 3 wherein said venting means (24, 26) included in said fabric sheet (32) comprises at least one vent hole (24, 26).

5. A multi-chamber passenger air bag cushion as defined in claim 1, 2 or 3 wherein said venting means included in the fabric sheet (32) is provided by the fabric sheet (32) being a permeable membrane.

## Patentansprüche

1. Mehrkammer-Beifahrer-Airbagkissen mit
a) einem Airbag (10) mit einer Mündung (28) für das Eintreten von Aufblasgas, wobei dieser Airbag in aufgeblasener Form eine Innenkammer mit einer Innenwand (30) bildet und die Mündung eine obere Kante hat,
b) einem Stoffbogen (32), der an der Innenwand (30) des Airbags befestigt ist und die Kammer in einen Mehrkammer-Airbag mit einer unteren Kammer (18) und einer oberen Kammer (20) teilt, wobei in diesem Airbag die obere Kammer und die untere Kammer eine gemeinsame Wand (22) haben, die von dem Stoffbogen gebildet wird, und in die Mündung (28) eintretendes Aufblasgas die untere Kammer (18) füllt und unter Druck setzt, und
c) Gasverbindungseinrichtungen (24, 26) in dem Stoffbogen (32) zur Entlastung des Druckes des Aufblasgases in der unteren Kammer (18), indem sie den Fluß des Aufblasgases durch sie hindurch in die obere Kammer (20) gestatten, um die obere Kammer unter Druck zu setzen,
wobei der Stoffbogen (32) im Inneren des Airbags befestigt ist und als ein Halteseil wirkt, um die Entfaltung des Airbags auszurichten und den entfalteten Airbag zu formen, wobei, wenn der Airbag entfaltet wird, der Anfangsfluß von in die Mündung (28) eintretendem Gas in die untere Kammer (18) geführt wird, welche sich schnell füllt und die Airbagentfaltung derart nach abwärts ausrichtet, daß die unter Druck gesetzte untere Kammer den Hauptteil der Beifahrerkörpermasse während des Beginns eines Zusammenstoßes unterstützt und die schnelle Entfaltung den Unterleibsbereich des Beifahrers zurückhält, bevor die Geschwindigkeit des Beifahrers in bezug auf jene des Fahrzeugs wesentlich erhöht wird, und danach das Gas zu der oberen Kammer (20) des Airbags überführt wird, was einen gleichmäßigeren Widerstand des Rumpfbereiches erlaubt, indem Gas durch die Gasverbindungseinrichtungen (24, 26) aus der unteren Kammer (18) abgeben wird, wenn der Innendruck darin zunimmt, und Gas zu der oberen Kammer (20) überführt wird, um den Kopf- und Schulterbereich des Beifahrers abzufangen, **dadurch gekennzeichnet**, daß der Stoffbogen (32) zwischen der oberen Kante der Mündung (28) des Airbags und einem mittleren Bereich (29) der Innenwand (30) gegenüber dieser Mündung (28) befestigt ist.

2. Mehrkammer-Beifahrer-Airbagkissen (10) nach Anspruch 1, worin der Stoffbogen (32) im Inneren des Airbags zwischen der oberen Kante der Mündung (28) des Airbags und dem mittleren Bereich (29) der Innenwand (30) durch Nähen befestigt ist.

3. Mehrkammer-Beifahrer-Airbagkissen (10) nach Anspruch 1 oder 2, weiterhin mit Einrichtungen (36) zur Entgasung der oberen Kammer.

4. Mehrkammer-Beifahrer-Airbagkissen (10) nach Anspruch 1, 2 oder 3, bei dem die Gasverbindungseinrichtungen (24, 26), die in dem Stoffbogen (32) eingeschlossen sind, wenigstens eine Gasverbindungsöffnung (24, 26) umfassen.

5. Mehrkammer-Beifahrer-Airbagkissen nach Anspruch 1, 2 oder 3, bei dem die in dem Stoffbogen (32) eingeschlossenen Gasverbindungseinrichtungen durch den Stoffbogen (32) vorgesehen sind, der eine permeable Membran ist.

## Revendications

1. Coussin de sécurité gonflable à chambres multiples pour passager comprenant :
(a) un coussin gonflable (10) possédant une bouche (28) pour l'entrée d'un gaz de gonflage, lequel coussin gonflable, lorsqu'il est gonflé, forme une chambre intérieure ayant une paroi interne (30), ladite bouche possédant un bord supérieur,
(b) une feuille de tissu (32) fixée à la paroi interne (30) dudit coussin gonflable et qui divise ladite chambre en un coussin gonflable à chambres multiples possédant une chambre inférieure (18) et une chambre supérieure (20), dans lequel coussin gonflable ladite chambre supérieure et ladite chambre inférieure ont une paroi commune (22) formée par ladite feuille de tissu, de sorte que le gaz de gonflage qui entre dans ladite bouche (28) remplit et met sous pression ladite chambre inférieure (18), et
(c) des moyens d'évent (24, 26) prévus dans ladite feuille de tissu (32) pour relâcher la pression du gaz de gonflage de la chambre inférieure (18) en laissant le gaz de gonflage les traverser et pénétrer dans ladite chambre supérieure (20) pour la mise sous pression de ladite chambre supérieure,
ladite feuille de tissu (32) étant fixée à l'intérieur dudit coussin gonflable et jouant le rôle d'un tirant pour diriger le déploiement dudit coussin gonflable et mettre le coussin gonflable déployé en forme dès que ledit coussin gonflable se déploie, le flux de gaz initial qui entre dans ladite bouche (28) étant projeté dans ladite chambre inférieure (18), laquelle se remplit rapidement et dirige le déploiement du coussin vers le bas, de sorte que la chambre inférieure mise sous pression retient la majeure partie de la masse du corps du passager pendant la période initiale d'une collision et que le déploiement rapide retient la zone abdominale du passager avant que le rapport de la vitesse du passager à celle du véhicule se soit accrue notablement, après quoi le gaz peut s'échapper vers la chambre supérieure (20) du coussin gonflable, en permettant ainsi d'obtenir une résistance plus uniforme de la région du torse par le fait qu'on laisse le gaz s'échapper de la chambre inférieure (18) à travers lesdits moyens d'évent (24, 26) lorsque la pression interne augmente, et qu'on envoie du gaz à la chambre supérieure (20) pour retenir la tête et la région des épaules du passager, caractérisé en ce que la feuille de tissu (32) est fixée entre ledit bord supérieur de ladite bouche (28) dudit coussin gonflable et une région intermédiaire (29) de ladite paroi interne (30) située en face de ladite bouche (28).

2. Coussin de sécurité gonflable (10) à chambres multiples pour passager selon la revendication 1, dans lequel ladite feuille de tissu (32) est fixée par couture à l'intérieur dudit coussin gonflable entre ledit bord supérieur de ladite bouche (28) dudit coussin gonflable et ladite région intermédiaire (29) de ladite paroi interne (30).

3. Coussin de sécurité gonflable (10) à chambres multiples pour passager selon la revendication 1 ou 2, comprenant en outre des moyens (36) servant à mettre ladite chambre supérieure à l'échappement.

4. Coussin de sécurité gonflable (10) à chambres multiples pour passager selon la revendication 1, 2 ou 3, dans lequel lesdits moyens d'évent (24, 26) inclus dans ladite feuille de tissu (32) comprennent au moins un trou d'évent (24, 26).

5. Coussin de sécurité gonflable à chambres multiples pour passager selon la revendication 1, 2 ou 3 dans lequel lesdits moyens d'évent inclus dans la feuille de tissu sont réalisés par le fait que la feuille de tissu (32) est une membrane perméable.
